# EUROPÄISCHE PATENTSCHRIFT

(11) **EP 0 991 528 B1**
(45) Veröffentlichungstag und Bekanntmachung des Hinweises auf die Patenterteilung: **19.12.2001**
(21) Anmeldenummer: 98941223.4
(22) Anmeldetag: 22.06.1998
(51) Int. Cl.: B60B 7/01

(54) **REIFENZIERRING, INSBESONDERE FÜR KFZ-RÄDER**
TYRE TRIM RING, ESPECIALLY FOR AUTOMOBILE WHEELS
ENJOLIVEUR, NOTAMMENT POUR ROUES DE VEHICULES AUTOMOBILES

(30) Priorität: 21.06.1997 DE 19726494; 28.10.1997 DE 19747520; 11.05.1998 DE 19821016
(43) Veröffentlichungstag der Anmeldung: 12.04.2000
(73) Patentinhaber: Vorrink, Reinhard, 48599 Gronau (DE)
(72) Erfinder: Vorrink, Reinhard, 48599 Gronau (DE)
(74) Vertreter: Petra, Elke, Dipl.-Ing.
(86) Internationale Anmeldenummer: DE9801711
(87) Internationale Veröffentlichungsnummer: WO9858809

(56) Entgegenhaltungen:
- AU-A- 6 037 186
- DE-U- 1 943 274
- DE-U- 29 710 896
- DE-U- 29 719 120
- FR-A- 1 061 278
- US-A- 2 915 335
- US-A- 2 996 336
- US-A- 3 085 829
- US-A- 3 597 002

## Beschreibung

Die Erfindung bezieht sich auf einen Reifenzierring für Fahrzeugräder, gemäß Oberbegriff des Patentanspruchs 1, wie sie insbesondere zur Erreichung besonderer ästhetischer / optischer Wirkung Verwendung finden. Ein derartiger Zierring ist z.B. aus der US-A-2 996 336 bekannt.

Es sind verschiedene Möglichkeiten, insbesondere in der optischen Umgestaltung von Fahrzeugrädern durch Zierringe bekannt und zwar:
1. Aufvulkanisieren von sogenannten Weißwandringen als Zierringe auf die Reifenaußenseite;
2. Anbringen von vorgefertigten Zierringen zwischen Reifen und Felgenhorn der Felge (US-PS 2,696,409 und US-PS 2,573,996). Diese Ausführungsformen sind bei schlauchlosen Reifen in Hinblick auf deren Betriebssicherheit nicht möglich.
3. Verwendug von Anbauteilen wie Radkappen und Felgenzierringen (DE 196 08 238 A1, DE 33 90 392 T1, US-PS 3,367,720). Die ästhetische Gestaltungsmöglichkeit dieser Zier-Anbauteile ist jedoch wegen deren reduzierten radialen Abmessungen relativ gering und insbesondere für stirnseitige Beschriftungen weniger geeignet.
4. Anbringen von Reifenzierringen an der Felge des komplett montierten Rades mittels Ealterungen, über die diese Halt bekommen (z.B. US-PS 2, 696, 409, US-PS 2,819 119, US-PS 2,915,335, US-PS 2,926,960 und FR-PS 1 061 278). Diese bekannten Reifenzierringe, also Zierringe, die in ihrer äußeren radialen Erstreckung weit über das Felgenhorn hinausreichend an der Reifenstirnseite anliegen, sind entweder an einem radialen Flansch der Radabdeckung angeklebt und mit diesem an der Felge lösbar befestigt, wobei der Zierring aus unterschiedlichem Material gebildeten Teilen zusammengesetzt ist (US-PS 2,819,119), wodurch eine komplexe Bauweise entsteht, die nur in dieser Zuordnung verwendbar ist. Zusätzliche Anbauteile können nicht z.B. am Felgenhorn befestigt werden. Die Befestigungsart über mehrere am Umfang des Zierringes angeordnete Clips am Felgenhorn weist insbesondere den Nachteil auf, daß zur Vermeidung von Unwucht die Clips äußerst exakt und gleichmäßig verteilt sein müssen.

Schließlich ist aus der US-PS 2,996,336 ein Reifenzierring bekannt, der mit seinem inneren wulstförmigen Befestigungsteil in die radiale Einbuchtung des Felgenhorns formmäßig eingreift. Dabei wird er von einem Clip-Haltering, der gleichzeitig den Befestigungsteil fest umgreift, am äußeren Rand des Felgenhorns angeklammert festgehalten. Es ist somit im Zusammenhang mit diesem bekannten Felgenzierring immer eine zusätzliche Halterung notwendig, um ihn sicher an der Felge zu befestigen.

Die bisher bekannten Möglichkeiten zur Umgestaltung von Kfz-Rädern weisen somit mehrere Nachteile auf:
- An- und Demontage erfordern teilweise einen hohen Arbeitsaufwand,
- eine Kombination mehrerer Anbauteile ist nicht ohne weiteres möglich,
- es wird oft spezielles Werkzeug benötigt,
- die Felgenoberfläche wird sehr schnell beschädigt,
- es sind zusätzliche Halterungen notwendig,
- zur Vermeidung von Unwucht müssen die Halterungen äußerst exakt und gleichmäßig an der Felge verteilt sein.

Aufgabe der Erfindung ist, einen Reifenzierring obiger Gattung anzugeben, der einfach aufgebaut ist, sicher, schnell und einfach montier- und nachrüstbar oder auswechselbar ist, mit gleichzeitiger Einsatz- und Kombinationsmöglichkeit für andere sowie vorhandene Anbauteile der Felge sowie einen einfachen Ersatzteilaustausch ermöglicht, und auch ohne zusätzliche Halterung auskommen kann.

Diese Aufgabe wird erfindungsgemäß durch einen gattungsgemäßen Reifenzierring mit den kennzeichnenden Merkmalen des Patentanspruchs 1 gelöst. Vorteilhafte Ausgestaltungen sind in den Unteransprüchen gekennzeichnet.

Demgemäß greift das Befestigungsteil des aus einem inneren, axial weisenden Befestigungsteil und einem äußeren, sich radial erstreckenden Zierteil bestehenden Reifenzierrings in eine radiale Einbuchtung des Felgeninnenmantels ohne zusätzliche Halterung radial einschnappend ein. Hierdurch kann sehr vorteilhaft der Reifenzierring schnell und einfach in die Felge auf- bzw. eingesetzt und auch wieder von dieser entfernt werden. Es ist lediglich darauf zu achten, daß die radialen Andruckkräfte des Zierrings in den Felgeneinbuchtungen ausreichend hoch sind, so daß der durch die Einbuchtung vorhandene Formschluß zwischen Felge und Zierring durch den zusätzlichen Kraftfluß ein gutes Festsetzen des Zierrings an der Felge sicherstellt. Zudem ist der Innendurchmesser des Zierringes ungefähr gleich dem Innendurchmesser der Felgenschulter, wodurch herkömmliche Anbauteile befestigbar bleiben.

Es ist von besonderem Vorteil, wenn zur Befestigung am Felgenhorn der Befestigungsteil des Zierringes in diesen radial von innen eingreifend ausgebildet ist. Hierfür weist das Befestigungsteil einen radial nach außen weisenden Ringwulst auf, der dem Profil der Innenrundung des Felgenhorns entspricht bzw. dieser angepaßt ist. Der Wulst kann jedoch einen etwas geringeren Radius aufweisen als derjenige der Felgenhorn-Einbuchtung, so daß unter stärkerem radialen Druck eine gute Profilanpassung vorhanden ist. Statt dem Ringwulst können am äußeren Umfang des Befestigungsteils mehrere Noppen oder Ringsegmente gleichmäßig angeordnet sein, wodurch gleichzeitig in vorteilhafter Weise die Möglichkeit besteht, im Befestigungsteil mehrere Unterbrechungen zur Befestigung zusätzlicher Bauteile wie Radabdeckung, Aswuchtgwichte, Felgenzierringe, zusätzlich oder nachträglich zu befestigen.

Vorteilhaft ist, wenn am Befestigungsteil des Reifenzierrings mehrerer radial nach außen hervorstehende, sich, axial erstreckende Blattfederelemente vorgesehen sind, die zumindest beim Einbau federnd achgeba um danach den Zierring fest an der Innenseite des Felgenhornes festzuhalten. Ein solches Blattfederelement kann zwei dachförmig zueinander angeordnete Schenkel aufweisen, deren äußere Enden am Außenumfang des Befestigungsteiles in an sich bekannter Weise befestigt sind, z.B. durch Kleben, Einstecken in schräge Taschen bzw. Einschnitte oder Einbringen während des Formens des Zierringes. Auch eine Wellenform ist sehr vorteilhaft.

Das Blattfederelement kann jedoch auch nur aus einem schräg in Montageeinschiebrichtung winkelig angeordnetes, gerades Teil sein, daß ein leichtes Einschieben ermöglicht, das sich danach in Ausschiebrichtung in der Einbuchtung des Felgenhorns einkrallt. Ein solcher Zierring kann leicht eingeschoben, jedoch nur mit erheblicher Krafteinwirkung bzw. Beschädigung herausgedrückt werden. Bei entsprechender Gestaltung der Blattfeder-Halterungen können diese beim Ausbauversuch nicht aus dem Felgenhorn herausgedrückt werden, sondern würden eher verstärkt eingepreßt. Je nach Ausführung des Reifenzierringes müßten die Halterungen zum Ausbau angehoben werden oder der Reifenzierring mißte eine lösbare (z.B. Schraub-) Verbindung aufweisen, so daß er seine Eigenstabilität durch diese Unterbrechung verlieren kann und dadurch ausbaubar ist. Je nach Ausführung der lösbaren Verbindung ist ein umgekehrter Einbau möglich, also ein Reifenzierring, der in das Felgenhorn eingelegt wird und durch Betätigung bzw. Verschließen der Verbindung in das Felgenhorn eingepreßt wird. Ein solcher Reifenzierring, der nach der Anmontage nicht einfach herausgezogen werden kann, bietet Schutz vor Mißbrauch dritter Personen. Hierdurch ist ein Reifenzierring mit Diebstahlschutz vorhanden.

Wie bereits vorerwähnt, erlaubt der erfinduagsgemäße Reifenzierring die nachträgliche Anordnung üblicher Radabdeckungen, die mit ihrem axial sich erstreckenden Befestigungsarmen radial in die Felgenschulter und insbesondere in den Felgenhump eingreifen. Erstreckt sich nun die Abdeckung radial bis nahe an das Felgenhorn heran, dann ist bei Anordnung eines erfindungsgemäßen Reifenzierrings zumindest dessen Befestigungsteil zwischen Radialteil des Felgeahoras und Außenring der Radabdeckung, also in dem zwischen diesen gebildeten, freien Zwischenraum angeordnet, so daß der Zierring zusätzlich durch die Radabdeckung oder ein anderes, handelsübliches Felgenanbauteil sicher gehalten wird.

Um sicherzustellen, daß das Anbauteil (z.B. Radabdeckung) trotz dessen eventueller axialer Verschiebung durch den zusätzlichen Reifenzierring, über dessen Befestigungsarme noch weiterhin ausreichend festgehalten wird, also auch in dem Zustand, in dem der Formschluß der Enden der Befestigungsarme mit den Einbuchtung des Felgenhumps nicht mehr sichergestellt ist, ist erfindungsgemäß in vorteilhafter Weise ein hülsenförmiger Adapter vorgesehen. Dieser Adapter ist entsprechend dem Innenmantel der Felge ausgebildet und weist an seinem inneren Ende einen in den Felgenhump eingreifenden Ring oder Noppen auf und besitzt an seinem Innenmantel mehrere Umfangsrillen. In diese Umfangsrillen greifen dann die Befestigungsarme sicher ein, so daß sogar verschieden dicke Zierringe mit gleich guter Sicherheit über ein bekanntes Felgenanbauteil sicher festgehalten werden können.

Die meisten Steilschulterfelgen (LKW) werden ohne Radabdeckung verwendet, so daß ein erfindungsgemäßer Zierring mit seinen Halterungen bzw. Befestigungsteilen in das stellenweise freie Felgenhorn greifen kann. Ein solcher Zierring kann gleichzeitig die Halteelemente für Radkappen bei LKW ersetzen, indem diese direkt an ihm befestigt werden.

Somit kann der erfindungsgemäße Zierring als fertiges komplettes Formbauteil genau so einfach wie sonstige Anbauteile (Radkappen, Felgenzierringe) in die Felge an- und demontiert werden. Um eine Kombination der einzelnen Anbauteile zu ermöglichen, wird der Zierring in bzw. an das Felgenhorn montiert. Am Felgenhorn wird meist das Wuchtgewicht befestigt. Andere Felgenanbauteile bekommen ihren Halt, indem sie auf Felgensehulter, -hump oder -bett greifen. Ein Großteil dieser Anbauteile ist so gestaltet, daß die gesamte Felge bzw. das gesamte Felgenhorn komplett abgedeckt wird. Hier entsteht ein freier Platz bzw. Zwischenraum an der Felge, der unter Berücksichtigung des Platzbedarfes des Wuchtgewichtes zur Aufnahme des Zierrings dient. Der Zierring wird in das Felgenhorn eingelegt und bekommt durch das nachfolgend anmontierte Anbauteil durch teilweise Abdeckung einen zusätzlichen sicheren Halt. Der Zierring wird somit ohne zusätzliche Halterung angebracht. Austausch und Demontage erfolgen ebenso komplikationslos.

Anbauteile für Kfz-Räder wie Radabdeckung, Felgenzierringe, Wuchtgewichte lassen sich einzeln ohne Probleme in an die Felge montieren, weil keines dieser Teile mit einem anderen kombiniert werden muß. Beim Anbau eines Zierringes, der in bzw. an die Felge zusätzlich angebracht wird, entstehen jedoch in einzelnen Fällen Kombinationsprobleme. Die verschiedenen Gestaltungen der Radkappen lassen herkömmlich nicht immer ein Abdecken des Felgenhornes zu oder bieten genügend Abstand zum Durchtritt des Reifenzierringes zwischen Außenkante des Felgenhornes und Anbauteil. Feigensierringe oder auch Radkappen, die in den Hump eingreifen, könnmen nach Anbau eines solchen Zierringes nicht mehr ohne weiteres verwendet werden, da durch den Platzbedarf des Ringes die Haltevorrichtungen des jeweiligen Anbauteiles nicht mehr bis in den Hump geschoben werden können, statt dessen auf die Felgenschultern rutschen und so den festen Halt nicht mehr sicherstellen. Durch den erfindungsgemäß ausgebildeten und an der Felge angebrachten Adapter können die gewünschten Anbauteile anmontiert werden bzw. bekommen durch diesen sicheren Halt.

Dadurch daß der erfindungsgemäße Adapter, durch seine entsprechende Formgebung über Felgen-Schulter und -Hump eingelegt, eine besondere Oberflächenbeschaffenheit und/oder Formgebung aufweist, besteht der große Vorteil, Anbauteilen den nötigen Halt zu geben. Sei es durch Rauheit oder Erhebungen bzw. Vertiefungen, wie Umfangsrillen, Nachbildung des Hump oder durch Elastizität, die ein Eindrücken der Halterung der Anbauteile ermöglicht, lassen sich die Anbauteile bis zur gewünschten Stellung in die Felge positionieren.

Gemäß weiterer Ausführungsform ist ein Adapter vorgesehen, der wie der vorbeschriebene in den Innenmantel der Felge form- und kraftschlüssig eingreift und zudem axial nach außen ausführend, um sich schließlich radial nach außen zu erstrecken bis knapp über das Felgenhorn, so daß der in das Felgenhorn bzw. in den Zwischenraum eingelegte Zierring, ähnlich wie bei eingesetzten Radblenden und Felgenzierringen, abgedeckt und gehalten wird.

In weiterer Ausführungsform weist der Adapter, der an seinem Eingreifteil in gleicher Weise ausgebildet ist wie vorgehend beschriebener Adapter, an seinem dem Einschiebende entgegengesetzten Ende eine eigene Aufnahmemöglichkeit für Reifenzierringe auf, z.B. radial nach außen sich erstreckende Flansche mit axial weisenden Enden, zum kastenförmigen Festhalten des Zierring-Befestigungsteils. Hierdurch ist der Vorteil gegeben, daß der Zierring ohne Rücksicht auf das Felgenhorn direkt über den Adapter angebracht werden kann, denn nach EURO-Norm sind je nach Felgen-Typ Form- und Maßunterschiede beim Felgenhorn möglich.

Durch den Adapter selbst entstehen weitere Dekor- und Farbgestaltungsmöglichkeiten für die Felge. Durch die Abdeckung des Felgenhorns und bei dementsprechender Gestaltung des Adapterringes entsteht ein zusätzliches selbständiges DekorAabauteil. Der Adapter stellt einen Grundbaustein für ein Baukastensystem für Felgenanbauteile dar. Auch hier entstehen neuartige Möglichkeiten für die Gestaltung von Kfz-Rädern.

Nachfolgend wird die Erfindung anhand mehrerer Ausführungsbeispiele unter Bezug auf die Zeichnung näher erläutert.

Es zeigen:
- Fig. 1:: einen teilweisen axialen Schnitt einer Felge mit einem Reifenzierring in erster Ausführungsform, als durchgehender Ring,
- Fig. 2:: einen Schnitt wie in Fig. 1, mit einem Reifenzierring in zweiter Ausführungsform, mit durchbrochenem Befestigungsteil des Zierringes,
- Fig. 3:: einen Schnitt wie weiter oben, in weiterer Ausführungsform des Zierrings, mit zweischenkeliger Befestigungs-Blattfeder,
- Fig. 4:: einen Schnitt wie in Fig. 3, mit einschenkeliger Befestigungs-Blattfeder,
- Fig. 5:: einen axialen Schnitt durch eine weitere Ausführungsform, mit Anbauteil und Adapterhülse,
- Fig. 6:: eine Adapterausführungsform mit Anbauteil, und
- Fig. 7:: eine Ausführungsform mit als Zierringbefestigung ausgestaltetem Adapter.

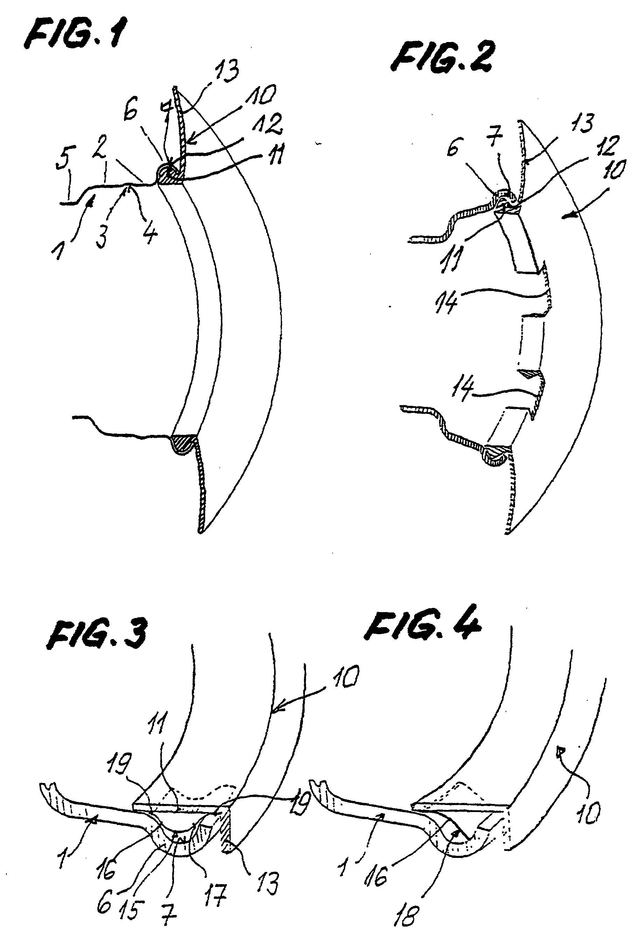

Wie aus Fig. 1 zu entnehmen ist, weist eine herkömmliche Kfz-Felge 1 eine Felgen-Schulter 2 mit einem Felgenhump 3 auf, der eine Einbuchtung 4 aufweist. Nach innen ist ein Felgen-Bett 5 vorgesehen, während nach außen ein Felgenhorn 6 vorbanden ist, das eine Einbuchtung 7 besitzt. Ein Reifenzierring 10 ist aus einem Befestigungsteil 11 und einem Zierteil 13 zusammengesetzt, wobei das Befestigungsteil 11 einen Wulst 12 besitzt, der formmäßig der Einbuchtung 7 des Felgenhorns 6 angepaßt ist.

Bei der Ausführungsform nach Fig. 2 weist der Wulst 12 des Reifenzierrings 10 einen etwas geringeren Radius auf, als die Einbuchtung 7 des Felgenhorns 6. Zudem sind im Befestigungsteil 11 mehrere Unterbrechungen 14 vorgesehen, die sich radial bis über das Felgenhorn 6 erstrecken, einen Zugriff zu diesem ermöglichend.

Fig. 3 zeigt eine Ausführungsform eines Reifenzierringes, an dessen Befestigungsteil 11 ein dach- bzw. V- oder wellenförmiges Blattfederelement 15 angebracht ist, das einen Einführschenkel 16 und einen Ausziehschenkel 17 aufweist und insgesamt formmäßig in die Einbuchtung 7 des Felgenhornes 6 eingreift.

Mit der Ausführungsform gemäß Fig. 4 sind mehrere in Einführrichtung schräg nach außen weisend angeordnete Blattfederelemente 18 angeordnet, die aus einem einzigen Einführschenkel 16 bestehen, die mit ihrem befestigungsseitigen Ende 19 in bekannter Weise, durch Ankleben, Einarbeiten während der Herstellung o.ä. am Befestigungsteil fest angebracht sind.

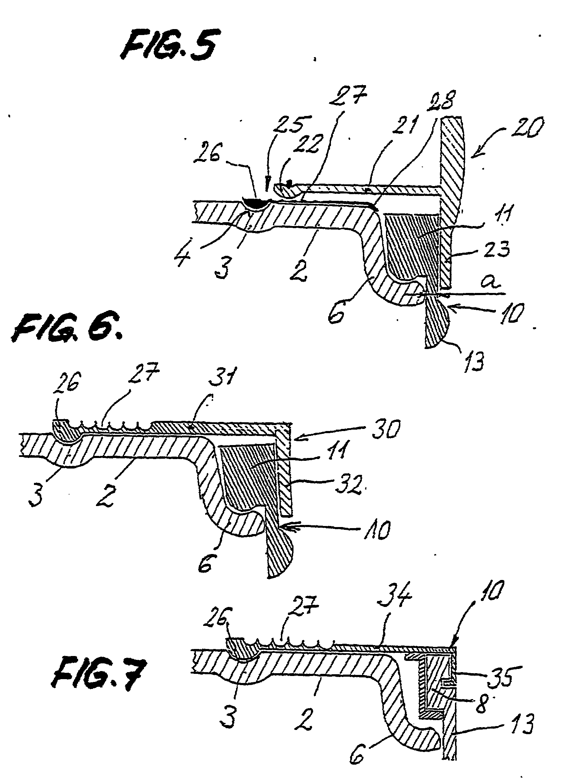

Beim Ausführungsbeispiel nach Fig. 5 ist eine zusätzliche Befestigung des Reifenzierrings, der insbesondere nach Fig. 1 und 2 ausgebildet sein kann, über ein Anbauteil 20, das z.B. eine herkömmliche Radabdeckung oder ein Felgenzierring sein kann, vorgesehen. Das Anbauteil 20 weist in bekannter Weise ein axial sich erstreckendes Befestigungselement 21 auf, das ein zylindrisches Element sein kann oder aus mehreren Befestigungsarmen besteht. Am äußeren Ende ist umfangsseitig ein Wulst 22 vorgesehen, der formmäßig zum Eingreifen in die Einbuchtung 4 des Felgenhumps 3 ausgebildet ist. Dadurch daß nunmehr der radiale Flansch 23 des Anbauteils 20 durch den zwischen diesem und dem Felgenhorn 6 eingebrachten Zierring axial nach außen versetzt angeordnet ist, greift der Wulst 22 des Befestiguagselemeates 21 nicht mehr formmäßig in die Einbuchtung 4 des Felgenhumps 3 ein, sondern stützt sich auf dem Innenmantel der Felgenschulter 2 radial ab. Um ein axiales Verrutschen des Anbauteiles 20 zu verhindern, ist ein hülsenförmiger Adapter 25 zwischen Felge und Befestiguagselement 21 eingelegt. Dieser weist an seinem einen Ende einen Wulst 26 auf, der in gleicher Weise wie der Wulst 22 des Befestigungselementes 21 ausgebildet ist, zum Eingriff in den Hump 3. An der Innenmantelfläche weist der Adapter 25 Umfangsnuten oder -rillen 27 auf, in die der Wulst 22 des Befestigungselements 21 des Anbauteils 20 eingreift, wodurch eine axiale Verschiebesicherung für das Anbauteil 20 in einfacher Weise realisiert ist. Um ein leichteres Einführen des Anbauteiles 20 über das Befestigungselement 21 zu erlauben, ist das dem Anbauteil 20 zuweisende Ende des Adapters 25 in Form eines Bogens 28 dem Übergang zwischen Felgen-Schulter 2 und Felgenhorn 6 angepaßt, hierdurch eine Einlaufschräge für das Befestigungselement 21 bildend.

Beim Ausführungsbeispiel nach Fig. 6 ist ein Anbauteil 30 vorgesehen, dessen axial weisendes Befestigungselement 31 ähnlich wie der Adapter 25 aus Fig. 5 ausgebildet ist, nämlich mit einem in den Hump 3 eingreifenden Wulst 26 und inneren Umfangsrillen 27. Die axiale Länge des Befestigungselements 31 ist dabei so ausgelegt, daß bei Einschnappen des Wulstes 26 in den Hump 3 dessen radial nach außen weisender Flanschteil 32, in ähnlicher Weise wie der Flansch 23 des Anbauteils 20 aus Fig.5, fest und sicher einen Zierring im Felgen-Horn 6 festhält. Die Umfangsrillen 27 dienen hier zur Befestigung weiterer Anbauteile, z.B. einer herkömmlichen Radabdeckung, wie das Anbauteil 20 aus Fig. 5.

Schließlich zeigt Fig. 7 in letzter Ausführungsform einen Reifenzierring 10, dessen Befestigungsflansch 8 über ein Befestigungselement 34 in das Felgeninnere eingreift, ähnlich wie das Befestigungselement 31 gemäß Ausführungsform nach Fig. 6. Zur Befestigung des Befestigungsflansches 8 des Zierringes am Befestigungselement 34 ist das entsprechende Ende des Befestigungselements 34 zum Festhalten des Befestigungsflansches 8 ausgebildet. Dabei kann hierfür eine Art Kastenform 35 vorgesehen sein, oder das Befestigungselement 34 weist einen radialen Flansch 32 auf, wie Ausführungsbeispiel nach Fig. 6, an dem stirnseitig innen oder außen der Zierring z.B. durch Kleben befestigt ist.

### BEZUGSZEICHENLISTE

- 1.: Felge
- 2.: Felgen-Schulter
- 3.: Felgenhump
- 4.: Einbuchtung
- 5.: Felgen-Bett
- 6.: Felgenhorn
- 7.: Einbuchtung
- 8.: Befestigungsflansch
- 9.: -
- 10.: Reifenzierring
- 11.: Befestigungsteil
- 12.: Wulst
- 13.: Zierteil
- 14.: Unterbrechung
- 15.: Blattfederelement
- 16.: Einführschenkel
- 17.: Ausziehschenkel
- 18.: Blattfederelement
- 19.: Ende
- 20.: Anbauteil
- 21.: Befestigungselement
- 22.: Wulst
- 23.: Flansch
- 24.: -
- 25.: Adapter
- 26.: Wulst
- 27.: Umfangsrillen
- 28.: Bogen
- 29.: -
- 30.: Anbauteile
- 31.: Adapter-Befestigungselement
- 32.: Flanschteil
- 33.: -
- 34.: axiales Befestigungselement
- 35.: Kastenform

## Patentansprüche

1. Reifenzierring für Fahrzeugräder,
mit einem inneren, axial weisenden Befestigungsteil (11; 8, 34) zur Befestigung am Innenmantel einer Fahrzeugfelge (1), und einem äußeren, sich radial erstreckenden Zierteil (13), der am Fahrzeugreifen stirnseitig anlegbar ist, wobei der Befestigungsteil (11; 8, 34) in eine vom Felgenhorn (6) oder Felgenhump (3) gebildete radiale Einbuchtung (7) des Felgeninnenmantels radial eingreifbar ausgebildet ist,
**dadurch gekennzeichnet, daß** der Befestigungsteil (11; 8, 34) in die radiale Einbuchtung (7 bzw. 4) ohne zusätzliche Halterung radial einschnappend eingreifbar ist, und einen Innendurchmesser etwa gleich dem der Felgen-Scbulter (2) aufweist.

2. Reifenzierring nach Anspruch 1,
**dadurch gekennzeichnet, daß** zur Befestigung am Felgenhorn (6) der Befestigungsteil (11) in dessen Einbuchtung (7) radial von innen eingreifend ausgebildet ist.

3. Reifenzierring nach Anspruch 2,
**dadurch gekennzeichnet, daß** am axial weisenden Befestiguagsteil (11) ein radialer Ringwulst (12) oder mehrere am Umfang ringförmig angeordnete Noppen vorgesehen sind.

4. Reifenzierring nach Anspruch 2,
**dadurch gekennzeichnet, daß** am äußeren Umfang des axialen Befestigungsteils (11) mehrere radial nockenförmig hervorstehende Blattfederelemente (15, 18) vorgesehen sind, die ein federndes Nachgeben zumindest beim Einbau erlauben.

5. Reifenzierring nach Anspruch 4,
dadurch gekannzeichnet, daß die Blattfederelemente (15, 18) dachförmig, mit zwei Schenkeln, mit Ein- (16) und Ausführschräge (17) oder einschenklig, nur mit Einführschräge (16) ausgebildet sind.

6. Reifenzierring nach den Ansprüchen 2 bis 5,
**dadurch gekennzeichnet, daß** der Befestigungsteil (11) in Umfangsrichtung mehrere Unterbrechungen (14) aufweist.

7. Reifenzierring nach den Ansprüchen 2 bis 6,
**dadurch gekennzeichnet, daß** zur Befestigung von radial einschnappend eingreifenden Anbauteilen (20) ein in den Hump (3) über äußere Noppen oder eine Ringwulst (26) eingreifender, zylindrischer Adapter (25) vorgesehen ist, der an seiner Innenmantelfläche, beginnend unmittelbar benachbart zur Ringwulst (26) mehrere Umfangsrillen (27) besitzt (Fig. 5).

8. Reifenzierring nach Anspruch 7,
**dadurch gekennzeichnet, daß** der Adapter (25) die gesamte Einführlänge bis zum Felgenhump (3) abdeckt und an seinem äußeren Rand in Form eines Bogens (28) dem Felgenprofil angepaßt, nach außen gebogen ist, eine Einführschräge für ein Befestigungselement (21) des Anbauteiles (20) bildend (Fig. 5).

9. Reifenzierring nach Anspruch 1,
**dadurch gekennzeichnet, daß** der Befestigungsteil (8, 34) des Zierringes (10) einen Befestigungsflansch (8) und ein axiales Befestigungselement (34) aufweist, das an seinem Einführende mit Einschnapp-Wulst (26) und Eingriff-Rillen (27) ausgebildet ist (Fig. 7).

10. Reifenzierring nach Anspruch 1,
**dadurch gekennzeichnet, daß** ein Adapter-Anbauteil (30) vorgesehen ist, das ein in den Hump (3) eingreifendes Adapter-Befestigungselement (31) und einen radial nach außen weisenden Flanschteil (32) aufweist, welcher am Zierring (10) stirnseitig außen anliegend und bis in Höhe des Felgenhornes reichend, eine zusätzliche Befestigung bildet und den Zierring am Felgenhorn axial sicher festhält (Fig. 6).

11. Reifenzierring nach Anspruch 9,
**dadurch gekennzeichnet, daß** das axiale Befestigungselement (34) am Befestigungsflansch (8) des Zierringes (10) über einen radialen Flansch z.B. durch Kleben oder durch Ausbildung einer in den Befestigungsflansch (8) formeingreifenden Kastenform (35) befestigt ist.

## Claims

1. Tyre trim ring for vehicle wheels, with an inner axially pointing fixing part (11; 8, 34) for fixture to the internal surface of a vehicle rim (1), and an outer radial extending trim part (13) which can be applied on the front side of the vehicle tyre, whereby the fixing part (11; 8, 34) is embodied so that it can be engaged radially in a radial recess (7) of the rim internal surface formed by the rim flange (6) or rim hump (3), **characterised in that** the fixing part (11; 8, 34) can be snapped into engagement radially into the radial recess (7 or 4) without additional support, and exhibits an inside diameter roughly equal to that of the rim shoulder (2).

2. Tyre trim ring according to claim 1, **characterised in that** for fixture to the rim flange (6) the fixing part (11) is embodied so that it engages radially from the inside in its recess (7).

3. Tyre trim ring according to claim 2, **characterised in that** a radial annular bead (12) or a plurality of projections arranged in a ring on the circumference are provided on the axially pointing fixing part (11).

4. Tyre trim ring according to claim 2, **characterised in that** a plurality of leaf spring elements (15, 18) projecting radially like cams and which allow a resilient yielding at least during installation are provided on the outer circumference of the axial fixing part (11).

5. Tyre trim ring according to claim 4, **characterised in that** the leaf spring elements (15, 18) are embodied in roof shape with two limbs with inward guide bevel (16) and outward guide bevel (17) or with one limb with only inward guide bevel (16).

6. Tyre trim ring according to claims 2 to 5, **characterised in that** in the circumferential direction the fixing part (11) exhibits a plurality of openings (14).

7. Tyre trim ring according to claims 2 to 6, **characterised in that** for fixture of attachments (20) which can be made to snap into engagement radially, a cylindrical adapter (25) is provided which engages in the hump (3) by means of outer projections or an annular bead (26) and has a plurality of circumferential grooves (27) on its internal surface beginning in the immediate vicinity of the annular bead (26) (fig. 5).

8. Tyre trim ring according to claim 7, **characterised in that** the adapter (25) covers the entire inward guide length to the rim hump (3) and on its outer edge is bent outwards in the form of a curve (28) matching the rim profile, forming an inward guide bevel for a fixing element (21) of the attachment (20) (fig. 5).

9. Tyre trim ring according to claim 1, **characterised in that** the fixing part (8, 34) of the trim ring (10) exhibits a fixing flange (8) and an axial fixing element (34) which at its inward guide end is embodied with a snap-in bead (26) and engagement grooves (27) (fig. 7).

10. Tyre trim ring according to claim 1, **characterised in that** an adapter attachment (30) is provided which exhibits an adapter fixing element (31) engaging in the hump (3) and a radially outward pointing flange part (32) which forms an additional fixture bearing on the outside on the front side of the trim ring (10) and extending to the height of the rim flange, and secures the trim ring axially to the ring flange (fig. 6).

11. Tyre trim ring according to claim 9, **characterised in that** the axial fixing element (34) is fixed to the fixing flange (8) of the trim ring (10) by means of a radial flange, for example by gluing or by the formation of a box shape (35) engaging positively in the fixing flange (8).

## Revendications

1. Enjoliveur de roue de véhicule automobile,
comprenant une partie (11 ; 8, 34) intérieure, dirigée axialement et destinée à se fixer sur la face latérale intérieure d'une jante (1) de véhicule automobile et une partie (13) d'enjolivement extérieure, s'étendant radialement et qui peut être appliquée du côté frontal à la roue du véhicule automobile, la partie (11 ; 8, 34) de fixation étant constituée de manière à pouvoir pénétrer radialement dans un évidement (7) radial de la face latérale intérieure de la jante, formé par le bord (6) de jante ou par l'épaulement (3) de jante, **caractérisé en ce que** la partie (11 ; 8, 34) de fixation peut pénétrer dans la cavité (7) par encliquetage radial sans fixation supplémentaire et a un diamètre intérieur à peu près égal à celui de la portée du talon (2).

2. Enjoliveur suivant la revendication 1, **caractérisé en ce que**, pour la fixation sur le bord (6) de jante, la partie (11) de fixation est constituée de manière à pénétrer radialement de l'intérieur dans sa cavité (7).

3. Enjoliveur suivant la revendication 2, **caractérisé en ce qu'**il est prévu, sur la partie (11) de fixation dirigée axialement, un bourrelet (12) radial annulaire ou plusieurs bossages disposés annulairement sur le pourtour.

4. Enjoliveur suivant la revendication 2, **caractérisé en ce qu'**il est prévu sur le pourtour extérieur de la partie (11) de fixation axiale plusieurs éléments (15, 18) en forme de ressort à lame faisant saillie radialement sous forme de cames et permettant un fléchissement élastique au moins lors du montage.

5. Enjoliveur suivant la revendication 4, **caractérisé en ce que** les éléments (15, 18) formant ressort à lame sont en forme de toit en ayant deux branches à biseau d'entrée (16) et de sortie (17) ou un seule branche n'ayant qu'un biseau (16) d'entrée.

6. Enjoliveur suivant les revendications 2 à 5, **caractérisé en ce que** la partie (11) de fixation comporte plusieurs interruptions (14) dans la direction du pourtour.

7. Enjoliveur suivant les revendications 2 à 6, **caractérisé en ce que**, pour la fixation de pièces (20) de montage pénétrant radialement avec encliquetage, il est prévu un adapteur (25) cylindrique pénétrant dans l'épaulement (3) par des bossages extérieurs ou par un bourrelet (26) annulaire et ayant sur sa surface latérale intérieure plusieurs rainures (27) de pourtour commençant juste au voisinage du bourrelet (26) annulaire (figure 5).

8. Enjoliveur suivant la revendication 7, **caractérisé en ce que** l'adapteur (25) recouvre toute la longueur d'introduction jusqu'à l'épaulement (3) de jante et est adapté par son bord extérieur en forme d'arc (28) au profil de la jante et courbé vers l'extérieur en formant un biseau d'introduction pour un élément (21) de fixation de la pièce (20) de montage (figure 5).

9. Enjoliveur suivant la revendication 1, **caractérisé en ce que** la partie (8, 34) de fixation de l'enjoliveur (10) a une bride (8) de fixation et un élément (34) axial de fixation qui est constitué, à son extrémité d'introduction, d'un bourrelet (26) d'encliquetage et de rainures (27) de pénétration (figure 7).

10. Enjoliveur suivant la revendication 1, **caractérisé en ce qu'**il est prévu une pièce (30) de montage adapteur, qui a un élément (31) de fixation d'adapteur pénétrant dans l'épaulement (3) et une partie (32) de bride tournée radialement vers l'extérieur qui, en s'appliquant extérieurement du côté frontal à l'enjoliveur (10) et en allant jusqu'au niveau du bord de jante, forme une fixation supplémentaire et maintient d'une manière sûre axialement l'enjoliveur sur le bord de jante (figure 6).

11. Enjoliveur suivant la revendication 9, **caractérisé en ce que** l'élément (34) axial de fixation est fixé sur la bride (8) de fixation de l'enjoliveur (10) par une bride radiale, par exemple par collage ou par constitution d'une forme (35) en caisson pénétrant, par complémentarité de forme, dans la bride (8) de fixation.
